# EUROPEAN PATENT APPLICATION

(11) **EP 4 564 933 A1**
(43) Date of publication of application: **04.06.2025**
(21) Application number: 23845521.6
(22) Date of filing: 25.07.2023
(51) Int. Cl.: H04W 52/02, H04W 56/00

(54) **METHOD AND APPARATUS FOR DETERMINING SYNCHRONIZATION REFERENCE CELL, TERMINAL, AND NETWORK SIDE DEVICE**

(30) Priority: 29.07.2022 CN 202210912132
(71) Applicant: Vivo Mobile Communication Co., Ltd., Dongguan, Guangdong 523863 (CN)
(72) Inventor: LI, Gen, Dongguan, Guangdong 523863 (CN)
(74) Representative: Germain Maureau
(86) International application number: PCT/CN2023/109019
(87) International publication number: WO 2024/022311

(57) **Abstract**

This application discloses a method for determining a synchronization reference cell, and pertains to the field of communication technologies. The method for determining a synchronization reference cell in embodiments of this application includes: determining, by a terminal, a synchronization reference cell of a first cell from a cell set based on configuration information of at least one cell in the cell set. The configuration information is used to assist the terminal in determining the synchronization reference cell of the first cell from the cell set, and the cell set includes the first cell.

## Description

### CROSS-REFERENCE TO RELATED APPLICATIONS

This application claims priority to Chinese Patent Application No. 202210912132.6, filed on July 29, 2022 and entitled "METHOD AND APPARATUS FOR DETERMINING SYNCHRONIZATION REFERENCE CELL, TERMINAL, AND NETWORK-SIDE DEVICE", which is incorporated herein by reference in its entirety.

### TECHNICAL FIELD

This application pertains to the field of communication technologies, and specifically relates to a method and an apparatus for determining a synchronization reference cell, a terminal, and a network-side device.

### BACKGROUND

In a multi-carrier deployment scenario, a base station needs to periodically send a synchronization reference signal of each carrier to a terminal. The terminal can fulfill functions such as establishment of a downlink time-frequency synchronization relationship and identification of a cell ID by listening to the synchronization reference signal sent by the base station.

However, energy consumption of the base station increases if a periodic synchronization reference signal is being sent on each carrier. Therefore, in the multi-carrier deployment scenario, when no synchronization reference signal is being sent on some carriers, how to perform synchronization by the terminal is an important problem that urgently needs to be resolved.

### SUMMARY

Embodiments of this application provide a method and an apparatus for determining a synchronization reference cell, a terminal, and a network-side device, to resolve a terminal synchronization problem in a case that no synchronization reference signal is being sent on a carrier.

According to a first aspect, a method for determining a synchronization reference cell is provided. The method includes:
determining, by a terminal, a synchronization reference cell of a first cell from a cell set based on configuration information of at least one cell in the cell set, where the configuration information is used to assist the terminal in determining the synchronization reference cell of the first cell from the cell set, and the cell set includes the first cell.

According to a second aspect, a method for determining a synchronization reference cell is provided. The method includes:
sending, by a network-side device, configuration information of at least one cell in a cell set to a terminal, where the configuration information is used to assist the terminal in determining a synchronization reference cell of a first cell from the cell set, and the cell set includes the first cell.

According to a third aspect, an apparatus for determining a synchronization reference cell is provided. The apparatus includes:
a first determining module, configured to determine a synchronization reference cell of a first cell from a cell set based on configuration information of at least one cell in the cell set, where the configuration information is used to assist the apparatus in determining the synchronization reference cell of the first cell from the cell set, and the cell set includes the first cell.

According to a fourth aspect, an apparatus for determining a synchronization reference cell is provided. The apparatus includes:
a first sending module, configured to send configuration information of at least one cell in a cell set to a terminal, where the configuration information is used to assist the terminal in determining a synchronization reference cell of a first cell from the cell set, and the cell set includes the first cell.

According to a fifth aspect, a terminal is provided. The terminal includes a processor and a memory. The memory stores a program or instructions capable of running on the processor, and when the program or the instructions are executed by the processor, the steps of the method according to the first aspect are implemented.

According to a sixth aspect, a terminal is provided. The terminal includes a processor and a communication interface. The processor is configured to determine a synchronization reference cell of a first cell from a cell set based on configuration information of at least one cell in the cell set. The configuration information is used to assist the terminal in determining the synchronization reference cell of the first cell from the cell set, and the cell set includes the first cell.

According to a seventh aspect, a network-side device is provided. The network-side device includes a processor and a memory. The memory stores a program or instructions capable of running on the processor, and when the program or the instructions are executed by the processor, the steps of the method according to the second aspect are implemented.

According to an eighth aspect, a network-side device is provided. The network-side device includes a processor and a communication interface. The communication interface is configured to send configuration information of at least one cell in a cell set to a terminal. The configuration information is used to assist the terminal in determining a synchronization reference cell of a first cell from the cell set, and the cell set includes the first cell.

According to a ninth aspect, a system for determining a synchronization reference cell is provided. The system includes a terminal and a network-side device. The terminal may be configured to perform the steps of the method according to the first aspect, and the network-side device may be configured to perform the steps of the method according to the second aspect.

According to a tenth aspect, a readable storage medium is provided. A program or instructions are stored on the readable storage medium, and when the program or the instructions are executed by a processor, the steps of the method according to the first aspect are implemented, or the steps of the method according to the second aspect are implemented.

According to an eleventh aspect, a chip is provided. The chip includes a processor and a communication interface. The communication interface is coupled to the processor, and the processor is configured to run a program or instructions to implement the method according to the first aspect or implement the method according to the second aspect.

According to a twelfth aspect, a computer program/program product is provided. The computer program/program product is stored on a storage medium, and the computer program/program product is executed by at least one processor to implement the steps of the method according to the first aspect or the steps of the method according to the second aspect.

In the embodiments of this application, the terminal determines the synchronization reference cell of the first cell from the cell set based on the configuration information of the at least one cell in the cell set, and determines synchronization information of the first cell based on synchronization information of the synchronization reference cell. In a case that the network-side device has not sent a synchronization reference signal of the first cell, the terminal may implement synchronization by using the synchronization information of the first cell. Correspondingly, with a terminal synchronization problem resolved, in a multi-cell deployment scenario, the network-side device is enabled to send synchronization reference signals of only some cells to the terminal, so that energy consumption of the network-side device is reduced, and a network energy-saving effect is achieved.

### BRIEF DESCRIPTION OF DRAWINGS

FIG. 1 is a schematic diagram of a wireless communication system to which an embodiment of this application is applicable;
FIG. 2 is a schematic flowchart 1 of a method for determining a synchronization reference cell according to an embodiment of this application;
FIG. 3 is a schematic flowchart 2 of a method for determining a synchronization reference cell according to an embodiment of this application;
FIG. 4 is a schematic diagram 1 of a structure of an apparatus for determining a synchronization reference cell according to an embodiment of this application;
FIG. 5 is a schematic diagram 2 of a structure of an apparatus for determining a synchronization reference cell according to an embodiment of this application;
FIG. 6 is a schematic diagram of a structure of a communication device according to an embodiment of this application;
FIG. 7 is a schematic diagram of a structure of a terminal according to an embodiment of this application; and
FIG. 8 is a schematic diagram of a structure of a network-side device according to an embodiment of this application.

### DESCRIPTION OF EMBODIMENTS

The following clearly describes the technical solutions in the embodiments of this application with reference to the accompanying drawings in the embodiments of this application. Clearly, the described embodiments are some rather than all of the embodiments of this application. Based on the embodiments of this application, all other embodiments obtained by a person of ordinary skill in the art fall within the protection scope of this application.

In the specification and the claims of this application, the terms "first", "second", and the like are used to distinguish between similar objects, but are not used to describe a specific order or sequence. It should be understood that the terms used in such a way are interchangeable in proper circumstances, so that the embodiments of this application can be implemented in an order other than the order illustrated or described herein. In addition, objects distinguished by "first" and "second" are usually of a same type, and a quantity of objects is not limited. For example, there may be one or more first objects. In addition, in the specification and the claims, "and/or" represents at least one of connected objects, and a character "/" generally represents an "or" relationship between associated objects.

It should be noted that technologies described in the embodiments of this application are not limited to a long term evolution (Long Term Evolution, LTE)/an LTE-advanced (LTE-Advanced, LTE-A) system, and may be further used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in the embodiments of this application are often used interchangeably. The described technologies may be used in the foregoing systems and radio technologies, and may also be used in another system and radio technology. The following descriptions depict a new radio (New Radio, NR) system as an example, and NR terms are used in most of the following descriptions, but these technologies are also applicable to a communication system other than an NR system application, for example, a 6th generation (6th Generation, 6G) communication system.

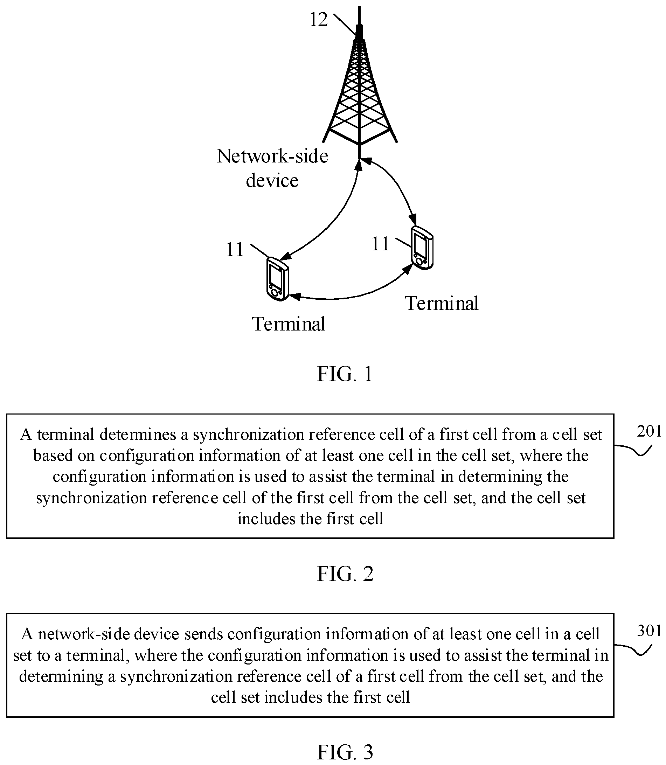

FIG. 1 is a schematic diagram of a wireless communication system to which an embodiment of this application is applicable. The wireless communication system shown in FIG. 1 includes a terminal 11 and a network-side device 12. The terminal 11 may be a mobile phone, a tablet personal computer (Tablet Personal Computer), a laptop computer (Laptop Computer), also referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/a virtual reality (virtual reality, VR) device, a robot, a wearable device (Wearable Device), vehicle user equipment (VUE), pedestrian user equipment (PUE), smart household (a household device having a wireless communication function, for example, a refrigerator, a television, a washing machine, or furniture), a game console, a personal computer (personal computer, PC), or a terminal-side device such as an automated teller machine or a self-service machine. The wearable device includes a smart watch, a smart band, a smart headset, smart glasses, smart jewelry (a smart bracelet, a smart wrist chain, a smart ring, a smart necklace, a smart anklet, a smart ankle chain, and the like), a smart wrist strap, smart clothing, and the like. It should be noted that a specific type of the terminal 11 is not limited in this embodiment of this application.

The network-side device 12 may include an access network device or a core network device. The access network device may also be referred to as a radio access network device, a radio access network (Radio Access Network, RAN), a radio access network function, or a radio access network unit. The access network device may include a base station, a WLAN access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. The base station is not limited to a specific technical term provided that a same technical effect is achieved. It should be noted that in this embodiment of this application, only a base station in an NR system is used as an example for description, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), a location management function (location manage function, LMF), an enhanced serving mobile location center (Enhanced Serving Mobile Location Centre, E-SMLC), a network data analytics function (network data analytics function, NWDAF), and the like. It should be noted that in this embodiment of this application, only a core network device in the NR system is used as an example for description, and a specific type of the core network device is not limited.

To facilitate a clearer understanding of the embodiments of this application, the following first describes some related background knowledge.

### 1. Synchronization in a single-carrier scenario

In the single-carrier scenario, a base station periodically sends a synchronization signal block (Synchronization Signal Block, SSB) of a carrier to a terminal.

The terminal determines downlink synchronization by detecting the periodically sent SSB, including determining a downlink frame/subframe/timeslot edge.

### 2. Synchronization in a carrier aggregation (Carrier Aggregation, CA) scenario

In the CA scenario, synchronization on a primary cell (Primary cell, Pcell) carrier or a primary secondary cell group cell (Primary SCG Cell, PScell) carrier is determined according to the foregoing method for the single-carrier scenario.

For an intra-band secondary cell (Secondary Cell, Scell), if an SSB is configured in the SCell, the terminal determines downlink synchronization in the SCell by detecting the configured periodic SSB. Uplink synchronization is determined under an indication of the downlink synchronization and a timing advance (Timing Advance, TA). If no SSB is configured in the SCell, synchronization in the SCell is determined by using a PCell or a PSCell corresponding to the SCell.

For an inter-band SCell, an SSB needs to be configured, and downlink synchronization in the SCell is obtained by using the SSB. In a current multi-carrier deployment scenario, an SSB needs to be sent on each inter-band carrier, which causes high energy consumption of the base station. Therefore, how to perform synchronization when no SSB is being sent on some or all inter-band carriers is a problem that needs to be resolved.

With reference to the accompanying drawings, the following describes, by using some embodiments and application scenarios thereof, in detail a method for determining a synchronization reference cell provided in the embodiments of this application.

In the method for determining a synchronization reference cell provided in the embodiments of this application, a terminal determines a synchronization reference cell of a first cell from a cell set based on configuration information of at least one cell in the cell set, and determines synchronization information of the first cell based on synchronization information of the synchronization reference cell. In a case that a network-side device has not sent a synchronization reference signal of the first cell, the terminal may implement synchronization by using the synchronization information of the first cell. Correspondingly, with a terminal synchronization problem resolved, in a multi-cell deployment scenario, the network-side device is enabled to send synchronization reference signals of only some cells to the terminal, so that energy consumption of the network-side device is reduced, and a network energy-saving effect is achieved.

FIG. 2 is a schematic flowchart 1 of a method for determining a synchronization reference cell according to an embodiment of this application. As shown in FIG. 2, the method includes step 201.

Step 201: A terminal determines a synchronization reference cell of a first cell from a cell set based on configuration information of at least one cell in the cell set, where the configuration information is used to assist the terminal in determining the synchronization reference cell of the first cell from the cell set, and the cell set includes the first cell.

It should be noted that this embodiment of this application is applicable to a scenario in which the terminal performs synchronization in a case of multi-carrier deployment. The terminal includes but is not limited to the types of the terminal 11 that are listed above. This is not limited in this application. In this embodiment of this application, the cell may include a carrier, and the cell set may include a carrier set. A synchronization reference signal may be, for example, an SSB, a tracking reference signal (Tracking Reference Signal, TRS), or a CSI reference signal (CSI Reference Signal, CSI-RS).

In a multi-carrier deployment scenario, a periodic synchronization reference signal is sent on each carrier, which causes an increase in energy consumption of a base station. Therefore, in the multi-carrier deployment scenario, when no synchronization reference signal is being sent on some carriers, to resolve a terminal synchronization problem in a case that no synchronization signal is being sent on a carrier, in this embodiment of this application, the terminal needs to determine the synchronization reference cell of the first cell from the cell set based on the configuration information of the at least one cell in the cell set. The configuration information of the at least one cell in the cell set may be sent by the base station to the terminal, or may be predefined in a protocol.

Optionally, after the terminal determines the synchronization reference cell of the first cell from the cell set, the terminal needs to determine second synchronization information of the first cell based on first synchronization information of the synchronization reference cell. In other words, after determining the synchronization reference cell of the first cell, the terminal may determine the first synchronization information of the synchronization reference cell as the second synchronization information of the first cell, so that downlink synchronization performed by the terminal in the first cell can be implemented without requiring a network-side device to send a synchronization reference signal of the first cell to the terminal.

Optionally, the first synchronization information and/or the second synchronization information include or includes at least one of the following:
(a) frame synchronization information;
(b) subframe synchronization information; and
(c) timeslot synchronization information.

Optionally, the configuration information includes at least one of the following:
(a) indication information, used to indicate whether a synchronization reference signal is being sent in a cell;
(b) a synchronization reference signal configuration, where
   specifically, the synchronization reference signal configuration includes at least one of the following: a normal synchronization reference signal configuration for actual sending, an energy-saving synchronization reference signal configuration for actual sending, a synchronization reference signal configuration for on-demand sending, and a subcarrier spacing of a synchronization reference signal;
(c) a synchronization reference signal sending feature, where
   specifically, the synchronization reference signal sending feature includes at least one of the following: a synchronization reference signal sending periodicity and a synchronization reference signal sending form, and a synchronization reference signal may be, for example, an SSB, a TRS, or a CSI-RS;
(d) a center frequency;
(e) band information, where
   specifically, the band information is band information of a cell or a carrier, and includes a band number, bandwidth, and the like.
(f) an operating mode, where the operating mode includes a normal mode or an energy-saving mode;
(g) a band type, where the band type includes a licensed band type or an unlicensed band type;
(h) space deployment information, where the space deployment information is used to indicate whether cells are co-located;
(i) a carrier type, where
   specifically, the carrier type includes at least one of the following: a PCell, a PSCell, an SCell, an anchor carrier, and a non-anchor carrier;
(j) timing advance group (Timing Advance Group, TAG) configuration information; and
(k) a subcarrier spacing of a bandwidth part BWP.

In the method for determining a synchronization reference cell provided in this embodiment of this application, the terminal determines the synchronization reference cell of the first cell from the cell set based on the configuration information of the at least one cell in the cell set, and determines the synchronization information of the first cell based on the synchronization information of the synchronization reference cell. In a case that the network-side device has not sent the synchronization reference signal of the first cell, the terminal may implement synchronization by using the synchronization information of the first cell. Correspondingly, with a terminal synchronization problem resolved, in a multi-cell deployment scenario, the network-side device is enabled to send synchronization reference signals of only some cells to the terminal, so that energy consumption of the network-side device is reduced, and a network energy-saving effect is achieved.

Optionally, the synchronization reference signal sending form includes at least one of the following:
(a) actual sending; and
(b) on-demand sending.

Optionally, the subcarrier spacing of the bandwidth part BWP includes at least one of the following:
(a) a subcarrier spacing of an initial bandwidth part initial BWP;
(b) a subcarrier spacing of a default BWP;
(c) a subcarrier spacing of the first active BWP;
(d) a largest or smallest subcarrier spacing in subcarrier spacings of all BWPs; and
(e) a subcarrier spacing of a random access channel RACH.

In this embodiment, the terminal may determine, in at least the following three manners, the synchronization reference cell of the first cell from the cell set based on a configuration of the at least one cell in the cell set:

Manner 1: In a case that the first cell in the cell set meets a first condition, the terminal determines, based on the configuration information of the at least one cell in the cell set, that the first cell is the synchronization reference cell.

Manner 2: The terminal determines M second cells that meet a second condition from the cell set based on the configuration information of the at least one cell in the cell set; and in a case that a third cell in the M second cells meets a third condition, the terminal determines that the third cell is the synchronization reference cell.

Manner 3: In a case that a fourth cell in the cell set meets a fourth condition, the terminal determines, based on the configuration information of the at least one cell in the cell set, that the fourth cell is the synchronization reference cell.

Manner 1 to Manner 3 are separately described herein.

Manner 1: In the case that the first cell in the cell set meets the first condition, the terminal determines, based on the configuration information of the at least one cell in the cell set, that the first cell is the synchronization reference cell.

Specifically, the first condition includes at least one of the following:
(a) a carrier type of the first cell is at least one of the following: a primary cell PCell carrier, a primary secondary cell group cell PSCell carrier, and an anchor carrier;
(b) the first cell has a synchronization reference signal configuration, where
   specifically, the synchronization reference signal configuration includes at least one of the following: a normal synchronization reference signal configuration for actual sending, an energy-saving synchronization reference signal configuration for actual sending, a synchronization reference signal configuration for on-demand sending, and a subcarrier spacing of a synchronization reference signal; and
(c) a synchronization reference signal sending periodicity of the first cell is less than or equal to a first threshold.

Specifically, the first threshold may be predefined according to a protocol, or may be configured by the base station or reported by the terminal.

In the foregoing implementation, in the case that the first cell in the cell set meets the first condition, the terminal may directly use the first cell as the synchronization reference cell.

Manner 2: The terminal determines the M second cells that meet the second condition from the cell set based on the configuration information of the at least one cell in the cell set; and in the case that the third cell in the M second cells meets the third condition, the terminal determines that the third cell is the synchronization reference cell.

Specifically, the terminal needs to select the M second cells that meet the second condition from the cell set based on the configuration information of the at least one cell in the cell set by using the second condition, and then select the third cell that meets the third condition from the M second cells by using the third condition. The terminal determines the third cell as the synchronization reference cell of the first cell.

Optionally, the second condition includes at least one of the following:
(a) the second cell has a synchronization reference signal configuration, where
   specifically, the synchronization reference signal configuration includes at least one of the following: a normal synchronization reference signal configuration for actual sending, an energy-saving synchronization reference signal configuration for actual sending, a synchronization reference signal configuration for on-demand sending, and a subcarrier spacing of a synchronization reference signal;
(b) a synchronization reference signal sending form of the second cell is actual sending;
(c) the synchronization reference signal sending form of the second cell is on-demand sending;
(d) a synchronization reference signal sending periodicity of the second cell is less than or equal to a second threshold, where
   specifically, the second threshold may be predefined according to a protocol, or may be configured by the base station or reported by the terminal;
(e) an interval between a center frequency of the second cell and a center frequency of the first cell is less than or equal to a third threshold, where
   specifically, the third threshold may be predefined according to a protocol, or may be configured by the base station or reported by the terminal;
(f) a band number of the second cell and a band number of the first cell meet a first target condition, where the first target condition includes at least one of the following: the band numbers are the same, a difference between the band numbers is less than or equal to a fourth threshold, and the band numbers fall within a same frequency range;
(g) an interval between a subcarrier spacing of a synchronization reference signal of the second cell and a subcarrier spacing of a BWP of the first cell is less than or equal to a fifth threshold, where
   specifically, the fifth threshold may be predefined according to a protocol, or may be configured by the base station or reported by the terminal, and
   the subcarrier spacing of the BWP of the first cell includes at least one of the following: a subcarrier spacing of an initial BWP, a subcarrier spacing of a default BWP, a subcarrier spacing of the first active BWP, a largest or smallest subcarrier spacing in subcarrier spacings of all BWPs, and a subcarrier spacing of a RACH; and
(h) the second cell is co-located with the first cell.

Optionally, the third condition includes at least one of the following:
(a) indication-based selection by the terminal or random selection, where
   specifically, the terminal may randomly select the third cell from the M second cells, or the terminal selects the third cell from the M second cells based on an indication; and
(b) a priority of the configuration information, where
   the priority of the configuration information includes at least one of the following:
      [1] a priority of the synchronization reference signal sending form, where
         for example, a cell having a normal-mode SSB configuration for actual sending is of a high priority, a cell having an energy-saving-mode SSB configuration for actual sending is of a middle priority, and a cell having an SSB configuration for on-demand sending is of a low priority; and
         for another example, a cell having a normal-mode SSB configuration for actual sending is of a high priority, and a cell having an energy-saving-mode SSB configuration for actual sending and a cell having an SSB configuration for on-demand sending are of a low priority;
      [2] a priority of the synchronization reference signal sending periodicity in a case that the sending periodicity is a minimum value;
      [3] a priority of a center frequency of a third cell in a case that an interval between the center frequency of the third cell and a center frequency of the first cell is a minimum value;
      [4] a priority of a band number of the third cell in a case that the band number of the third cell is the same as a band number of the first cell;
      [5] a priority of a subcarrier spacing of a synchronization reference signal of the third cell in a case that an interval between the subcarrier spacing of the synchronization reference signal of the third cell and a subcarrier spacing of a BWP of the first cell is zero or is a minimum value; and
      [6] a priority of the carrier type in a case that a carrier type of the third cell is any one of a PCell carrier, a PSCell carrier, and an anchor carrier.

Manner 3: In the case that the fourth cell in the cell set meets the fourth condition, the terminal determines, based on the configuration information of the at least one cell in the cell set, that the fourth cell is the synchronization reference cell.

Specifically, in the case that the fourth cell in the cell set meets the fourth condition, the terminal may directly determine the fourth cell as the synchronization reference cell of the first cell.

The fourth condition includes at least one of the following:
(a) the fourth cell has a synchronization reference signal configuration;
(b) a synchronization reference signal sending form of the fourth cell is actual sending;
(c) the synchronization reference signal sending form of the fourth cell is on-demand sending;
(d) a synchronization reference signal sending periodicity of the fourth cell is less than or equal to a sixth threshold, where
   specifically, the sixth threshold may be predefined according to a protocol, or may be configured by the base station or reported by the terminal;
(e) an interval between a center frequency of the fourth cell and a center frequency of the first cell is less than or equal to a seventh threshold, where
   specifically, the seventh threshold may be predefined according to a protocol, or may be configured by the base station or reported by the terminal;
(f) a band number of the fourth cell and a band number of the first cell meet a second target condition, where the second target condition includes at least one of the following: the band numbers are the same, a difference between the band numbers is less than or equal to an eighth threshold, and the band numbers fall within a same frequency range;
(g) an interval between a subcarrier spacing of a synchronization reference signal of the fourth cell and a subcarrier spacing of a BWP of the first cell is less than or equal to a ninth threshold, where
   specifically, the ninth threshold may be predefined according to a protocol, or may be configured by the base station or reported by the terminal, and
   a subcarrier spacing of a BWP of the fourth cell includes at least one of the following: a subcarrier spacing of an initial BWP, a subcarrier spacing of a default BWP, a subcarrier spacing of the first active BWP, a largest or smallest subcarrier spacing in subcarrier spacings of all BWPs, and a subcarrier spacing of a RACH; and
(h) the fourth cell is co-located with the first cell.

Optionally, the terminal needs to receive the configuration information that is of the at least one cell in the cell set and that is sent by the network-side device.

It should be noted that the configuration information of the at least one cell in the cell set is carried in at least one of a synchronization information block, system information, and radio resource control RRC configuration information of a fifth cell.

The fifth cell includes at least one of the following: a PCell carrier, a PSCell carrier, and an anchor carrier.

Optionally, after determining the second synchronization information of the first cell based on the first synchronization information of the synchronization reference cell, the terminal needs to send a wakeup signal for the synchronization reference cell to the network-side device, which is specifically implemented by using the following step: In a case that the synchronization reference cell meets a fifth condition, the terminal sends the wakeup signal for the synchronization reference cell to the network-side device. The wakeup signal is used to trigger a synchronization reference signal to be sent in the synchronization reference cell.

Specifically, the fifth condition includes at least one of the following:
(a) the synchronization reference cell has a synchronization reference signal configuration, and a synchronization reference signal sending form of the synchronization reference cell is on-demand sending;
(b) the synchronization reference cell has a synchronization reference signal configuration, and an operating mode of the synchronization reference cell is the energy-saving mode;
(c) a synchronization reference signal actually sent in the synchronization reference cell cannot meet a synchronization requirement of the terminal;
(d) the operating mode of the synchronization reference cell is the energy-saving mode; and
(e) the synchronization reference cell has a wakeup signal configuration, and the wakeup signal configuration is used to indicate the terminal to send the wakeup signal for the synchronization reference cell, to trigger the synchronization reference signal to be sent in the synchronization reference cell.

In the foregoing implementation, in the case that the synchronization reference cell meets the fifth condition, the terminal sends the wakeup signal for the synchronization reference cell to the network-side device, so that the network-side device triggers the synchronization reference cell to send the synchronization reference signal.

Optionally, the wakeup signal is sent in the first cell or the synchronization reference cell.

Optionally, the wakeup signal configuration is obtained in at least one of the following manners:
(a) being predefined in a protocol; and
(b) being carried in at least one of a synchronization information block, system information, and RRC configuration information of a sixth cell.

The sixth cell includes at least one of the following: a PCell carrier associated with the first cell or the synchronization reference cell, a PSCell carrier associated with the first cell or the synchronization reference cell, an anchor carrier associated with the first cell or the synchronization reference cell, a neighboring cell or an adjacent carrier of the first cell or the synchronization reference cell, and a cell in a same tracking area as the first cell or the synchronization reference cell.

FIG. 3 is a schematic flowchart 2 of a method for determining a synchronization reference cell according to an embodiment of this application. As shown in FIG. 3, the method includes step 301.

Step 301: A network-side device sends configuration information of at least one cell in a cell set to a terminal, where the configuration information is used to assist the terminal in determining a synchronization reference cell of a first cell from the cell set, and the cell set includes the first cell.

It should be noted that this embodiment of this application is applicable to a scenario in which the terminal determines downlink synchronization in a case of multi-cell deployment. The terminal includes but is not limited to the types of the terminal 11 that are listed above. This is not limited in this application. The network-side device includes but is not limited to the types of the network-side device 12 that are listed above. For example, the network-side device includes at least one of the following: a core network node, an access network node (for example, a base station), and a neural network processing node. The core network node is, for example, a network data analytics function (Network Data Analytics Function, NWDAF) network element and/or a location management function (location management function, LMF) network element.

In a multi-carrier deployment scenario, a periodic synchronization reference signal is sent on each carrier, which causes an increase in energy consumption of the base station.

Therefore, in the multi-carrier deployment scenario, when no synchronization reference signal is being sent on some carriers, to resolve a terminal synchronization problem in a case that no synchronization signal is being sent on a carrier, in this embodiment of this application, the network-side device needs to send the configuration information of the at least one cell in the cell set to the terminal. The configuration information is used to assist the terminal in determining the synchronization reference cell of the first cell from the cell set, and the cell set includes the first cell.

Correspondingly, after the terminal receives the configuration information that is of the at least one cell in the cell set and that is sent by the network-side device, the terminal determines the synchronization reference cell of the first cell from the cell set based on the configuration information of the at least one cell in the cell set.

Optionally, the configuration information includes at least one of the following:
(a) indication information, used to indicate whether a synchronization reference signal is being sent in a cell;
(b) a synchronization reference signal configuration, including at least one of the following: a normal synchronization reference signal configuration for actual sending, an energy-saving synchronization reference signal configuration for actual sending, a synchronization reference signal configuration for on-demand sending, and a subcarrier spacing of a synchronization reference signal;
(c) a synchronization reference signal sending feature, including at least one of the following: a synchronization reference signal sending periodicity and a synchronization reference signal sending form;
(d) a center frequency;
(e) band information;
(f) an operating mode, where the operating mode includes a normal mode or an energy-saving mode;
(g) a band type, where the band type includes a licensed band type or an unlicensed band type;
(h) space deployment information, where the space deployment information is used to indicate whether cells are co-located;
(i) a carrier type;
(j) a timing advance group TAG configuration information; and
(k) a subcarrier spacing of a bandwidth part BWP.

In this embodiment of this application, the network-side device sends the configuration information of the at least one cell in the cell set to the terminal, where the configuration information is used to assist the terminal in determining the synchronization reference cell of the first cell from the cell set, so that the terminal determines the synchronization reference cell of the first cell from the cell set based on the configuration information of the at least one cell in the cell set, determines synchronization information of the first cell based on synchronization information of the synchronization reference cell, and in a case that the network-side device has not sent a synchronization reference signal of the first cell, may implement synchronization by using the synchronization information of the first cell. With a terminal synchronization problem resolved, in a multi-cell deployment scenario, the network-side device is enabled to send synchronization reference signals of only some cells to the terminal, so that energy consumption of the network-side device is reduced, and a network energy-saving effect is achieved.

Optionally, the synchronization reference signal sending form includes at least one of the following:
(a) actual sending; and
(b) on-demand sending.

Optionally, the subcarrier spacing of the bandwidth part BWP includes at least one of the following:
a subcarrier spacing of an initial bandwidth part initial BWP;
a subcarrier spacing of a default BWP;
a subcarrier spacing of the first active BWP;
a largest or smallest subcarrier spacing in subcarrier spacings of all BWPs; and
a subcarrier spacing of a random access channel RACH.

Optionally, the configuration information is carried in at least one of a synchronization information block, system information, and radio resource control RRC configuration information of a fifth cell.

The fifth cell includes at least one of the following: a primary cell PCell carrier, a primary secondary cell group cell PSCell carrier, and an anchor carrier.

Optionally, in a case that the network-side device receives a wakeup signal that is for the synchronization reference cell and that is sent by the terminal, the network-side device needs to trigger the synchronization reference signal to be sent in the synchronization reference cell, which is specifically implemented in the following manner, and includes step (1) and step (2).

Step (1): The network-side device receives the wakeup signal that is for the synchronization reference cell and that is sent by the terminal. The wakeup signal is sent by the terminal to the network-side device in a case that the synchronization reference cell meets a fifth condition.

Step (2): The network-side device triggers, based on the wakeup signal, the synchronization reference cell to send the synchronization reference signal to the terminal.

Specifically, the fifth condition includes at least one of the following:
(a) the synchronization reference cell has a synchronization reference signal configuration, and a synchronization reference signal sending form of the synchronization reference cell is on-demand sending;
(b) the synchronization reference cell has a synchronization reference signal configuration, and an operating mode of the synchronization reference cell is the energy-saving mode;
(c) a synchronization reference signal actually sent in the synchronization reference cell cannot meet a synchronization requirement of the terminal;
(d) the operating mode of the synchronization reference cell is the energy-saving mode; and
(e) the synchronization reference cell has a wakeup signal configuration, and the wakeup signal configuration is used to indicate the terminal to send the wakeup signal for the synchronization reference cell, to trigger the synchronization reference signal to be sent in the synchronization reference cell.

Optionally, the wakeup signal configuration is obtained in at least one of the following manners:
(a) being predefined in a protocol; and
(b) being carried in at least one of a synchronization information block, system information, and RRC configuration information of a sixth cell, where the sixth cell includes at least one of the following: a PCell carrier associated with the first cell or the synchronization reference cell, a PSCell carrier associated with the first cell or the synchronization reference cell, an anchor carrier associated with the first cell or the synchronization reference cell, a neighboring cell or an adjacent carrier of the first cell or the synchronization reference cell, and a cell in a same tracking area as the first cell or the synchronization reference cell.

To facilitate a clearer understanding of the method for determining a synchronization reference cell provided in the embodiments of this application, with reference to Embodiment 1 and Embodiment 2, the following further describes the method for determining a synchronization reference cell.

### Embodiment 1:

Step 1: A terminal obtains configuration information of a first carrier set (namely, the cell set mentioned above, including cell0 (namely, a PCell, a PSCell, or an anchor carrier), cell1, ..., and cellN) from cell0.

Specifically, the configuration information includes at least one of the following:
(a) indication information, used to indicate whether a synchronization reference signal is being sent on a carrier;
(b) a synchronization reference signal configuration, where
   specifically, the synchronization reference signal configuration includes at least one of the following: a normal synchronization reference signal configuration for actual sending, an energy-saving synchronization reference signal configuration for actual sending, a synchronization reference signal configuration for on-demand sending, and a subcarrier spacing of a synchronization reference signal;
(c) a synchronization reference signal sending feature, where
   specifically, the synchronization reference signal sending feature includes at least one of the following: a synchronization reference signal sending periodicity and a synchronization reference signal sending form, and a synchronization reference signal may be, for example, an SSB, a TRS, or a CSI-RS;
(d) a center frequency;
(e) band information, where
   specifically, the band information is band information of a carrier, and includes a band number, bandwidth, and the like;
(f) an operating mode, where the operating mode includes a normal mode or an energy-saving mode;
(g) a band type, where the band type includes a licensed band type or an unlicensed band type;
(h) space deployment information, where the space deployment information is used to indicate whether carriers are co-located;
(i) a carrier type, where
   specifically, the carrier type includes at least one of the following: a PCell, a PSCell, an SCell, an anchor carrier, and a non-anchor carrier;
(j) timing advance group (Timing Advance Group, TAG) configuration information; and
(k) a subcarrier spacing of a bandwidth part BWP.

In an actual application, the configuration information of the first carrier set is, for example,
cell0: a carrier type is "PCell or anchor carrier", indication information is "an SSB is being sent", a synchronization reference signal sending periodicity is 20 ms, a band number is "B0", and a center frequency is "F0";
cell1: a carrier type is "SCell or non-anchor carrier", indication information is "no SSB is being sent", a band number is "B0", and a center frequency is "F1";
cell2: a carrier type is "SCell or non-anchor carrier", indication information is "an SSB is being sent", a synchronization reference signal sending periodicity is 80 ms, a band number is "B1", and a center frequency is "F2";
cell3: a carrier type is "SCell or non-anchor carrier", indication information is "an SSB is being sent", a synchronization reference signal sending periodicity is 160 ms, a band number is "B1", and a center frequency is "F3";
cell4: a carrier type is "SCell or non-anchor carrier", indication information is "no SSB is being sent", a band number is "B1", and a center frequency is "F4"; and
cell5: a carrier type is "SCell or non-anchor carrier", indication information is "no SSB is being sent", a band number is "B2", and a center frequency is "F5".

Step 2: The terminal determines a synchronization reference carrier of each carrier in the first carrier set based on the configuration information of the first carrier set.

Specifically, the terminal may determine the synchronization reference carrier of each carrier (namely, the first cell mentioned above, also referred to as a first carrier) in the first carrier set based on the configuration information of the first carrier set in at least the following three manners:

Manner 1: In a case that the first carrier meets a first condition, the terminal directly determines, based on the configuration information of the first carrier set, that the first carrier is the synchronization reference carrier.

For example, if the first condition is "an SSB is being sent on the first carrier and/or an SSB sending periodicity of the first carrier is less than or equal to 80 ms", synchronization reference carriers of cell0 and cell2 are CellO and Cell2.

Manner 2: Step [1]: The terminal determines M second carriers that meet a first criterion (namely, the second condition mentioned above) from the first carrier set based on the configuration information of the first carrier set.

For example, the first criterion is "an SSB is configured or there is an SSB configuration for on-demand sending, and a center frequency interval is less than or equal to Fthresh". An SSB is configured for sending in both cell0 and cell2, abs(F1-F0)<=Fthresh, and abs(F1-F2)<=Fthresh, in other words, cell0 and cell2 meet the first criterion. In this case, the first carrier cell1 corresponds to two second carriers: cell0 and cell2.

Step [2]: In a case that a third carrier (namely, the third cell mentioned above) in the M second carriers meets a second criterion (namely, the third condition mentioned above), the terminal determines that the third carrier is the synchronization reference carrier of the first carrier.

For example, the second criterion is "priority 1: selecting a carrier having a same band number as the first carrier, namely, an intra-band carrier; and priority 2: selecting a carrier having a smallest center frequency interval".

Because cell0 has a same band as cell1, the terminal preferentially selects cell0 as the synchronization reference carrier of the first carrier cell1.

Manner 3: In a case that a fourth carrier (namely, the fourth cell mentioned above) in the first carrier set meets a third criterion (namely, the fourth condition mentioned above), the terminal determines, based on the configuration information of the first carrier set, that the fourth carrier is the synchronization reference carrier.

For example, if the third criterion is "selecting an intra-band carrier on which an SSB is being sent and that has a smallest center frequency interval", for cell1, the synchronization reference carrier selected based on the third criterion is cell0.

A manner of determining a synchronization reference carrier of another first carrier is the same as the foregoing step 1 and step 2, and details are not described herein again.

### Embodiment 2:

Step 1: A terminal obtains configuration information of a first carrier set (namely, the cell set mentioned above, including cell0 (namely, a PCell, a PSCell, or an anchor carrier), cell1, ..., and cellN) from cell0.

Specifically, the configuration information includes at least one of the following:
(a) indication information, used to indicate whether a synchronization reference signal is being sent on a carrier;
(b) a synchronization reference signal configuration, where
   specifically, the synchronization reference signal configuration includes at least one of the following: a normal synchronization reference signal configuration for actual sending, an energy-saving synchronization reference signal configuration for actual sending, a synchronization reference signal configuration for on-demand sending, and a subcarrier spacing of a synchronization reference signal;
(c) a synchronization reference signal sending feature, where
   specifically, the synchronization reference signal sending feature includes at least one of the following: a synchronization reference signal sending periodicity and a synchronization reference signal sending form, and a synchronization reference signal may be, for example, an SSB, a TRS, or a CSI-RS;
(d) a center frequency;
(e) band information, where
   specifically, the band information is band information of a carrier, and includes a band number, bandwidth, and the like;
(f) an operating mode, where the operating mode includes a normal mode or an energy-saving mode;
(g) a band type, where the band type includes a licensed band type or an unlicensed band type;
(h) space deployment information, where the space deployment information is used to indicate whether carriers are co-located;
(i) a carrier type, where
   specifically, the carrier type includes at least one of the following: a PCell, a PSCell, an SCell, an anchor carrier, and a non-anchor carrier;
(j) timing advance group (Timing Advance Group, TAG) configuration information; and
(k) a subcarrier spacing of a bandwidth part BWP.

In an actual application, the configuration information of the first carrier set is, for example,
cell0: a carrier type is "PCell or anchor carrier", indication information is "an SSB is being sent", a synchronization reference signal sending periodicity is 20 ms, a band number is "B0", and a center frequency is "F0";
cell1: a carrier type is "SCell or non-anchor carrier", indication information is "no SSB is being sent", a band number is "B0", and a center frequency is "F1";
cell2: a carrier type is "SCell or non-anchor carrier", an operating mode is "energy-saving mode", a synchronization reference signal configuration is "there is an on demand SSB configuration", a synchronization reference signal sending periodicity that is on demand triggered is "80 ms", a band number is "B1", and a center frequency is "F2";
cell3: a carrier type is "SCell or non-anchor carrier", indication information is "no SSB is being sent", a band number is "B1", and a center frequency is "F3";
cell4: a carrier type is "SCell or non-anchor carrier", indication information is "no SSB is being sent", a band number is "B1", and a center frequency is "F4"; and
cell5: a carrier type is "SCell or non-anchor carrier", indication information is "no SSB is being sent", a band number is "B2", and a center frequency is "F5".

Step 2: The terminal determines a synchronization reference carrier of each carrier in the first carrier set based on the configuration information of the first carrier set.

Specifically, the terminal may determine the synchronization reference carrier of each carrier (namely, the first cell mentioned above, also referred to as a first carrier) in the first carrier set based on the configuration information of the first carrier set in at least the following three manners:

Manner 1: In a case that the first carrier meets a first condition, the terminal directly determines, based on the configuration information of the first carrier set, that the first carrier is the synchronization reference carrier.

For example, if the first condition is "an SSB is being sent on the first carrier or the first carrier has an on demand SSB configuration", synchronization reference carriers of cell0 and cell2 are CellO and Cell2.

Manner 2: If no SSB is being sent on the first carrier or an SSB sending periodicity of the first carrier is greater than 160 ms, the following step [1] and step [2] are performed:

Step [1]: The terminal determines M second carriers that meet a first criterion (namely, the second condition mentioned above) from the first carrier set based on the configuration information of the first carrier set.

For example, the first criterion is "an SSB is configured or there is an SSB configuration for on-demand sending, and a center frequency interval is less than or equal to Fthresh".

For cell5, an SSB is configured or there is an on demand SSB configuration in cell0 and cell2, abs(F5-F0)<=Fthresh, and abs(F5-F2)<=Fthresh, in other words, cell0 and cell2 meet the first criterion. In this case, the first carrier cell5 corresponds to two second carriers: cell0 and cell2.

Step [2]: In a case that a third carrier (namely, the third cell mentioned above) in the M second carriers meets a second criterion (namely, the third condition mentioned above), the terminal determines that the third carrier is the synchronization reference carrier of the first carrier.

For example, the second criterion is "priority 1: selecting a carrier on which an SSB is actually sent; priority 2: selecting a carrier having a same band number as the first carrier, namely, an intra-band carrier; and priority 3: selecting a carrier having a smallest center frequency interval".

For cell5, because an SSB is actually sent in cell0, the terminal preferentially selects cell0 as the synchronization reference carrier of the first carrier cell5.

Manner 3: In a case that a fourth carrier (namely, the fourth cell mentioned above) in the first carrier set meets a third criterion (namely, the fourth condition mentioned above), the terminal determines, based on the configuration information of the first carrier set, that the fourth carrier is the synchronization reference carrier.

For example, if the third criterion is "selecting an intra-band carrier on which an SSB is being sent or can be on demand triggered", for cell3, a synchronization reference carrier selected according to the third criterion is cell2.

A manner of determining a synchronization reference carrier of another first carrier is the same as the foregoing step 1 and step 2, and details are not described herein again.

After cell2 is determined as the synchronization reference carrier of cell3, the terminal sends a wakeup signal in cell2 to trigger SSB sending in cell2.

In the method for determining a synchronization reference cell provided in the embodiments of this application, the terminal determines the synchronization reference cell of the first cell from the cell set based on the configuration information of the at least one cell in the cell set, and determines the synchronization information of the first cell based on the synchronization information of the synchronization reference cell. In the case that the network-side device has not sent the synchronization reference signal of the first cell, the terminal may implement synchronization by using the synchronization information of the first cell. Correspondingly, with the terminal synchronization problem resolved, in the multi-cell deployment scenario, the network-side device is enabled to send synchronization reference signals of only some cells to the terminal, so that energy consumption of the network-side device is reduced, and a network energy-saving effect is achieved.

The method for determining a synchronization reference cell provided in the embodiments of this application may be performed by an apparatus for determining a synchronization reference cell. In the embodiments of this application, an example in which the apparatus for determining a synchronization reference cell performs the method for determining a synchronization reference cell is used to describe the apparatus for determining a synchronization reference cell provided in the embodiments of this application.

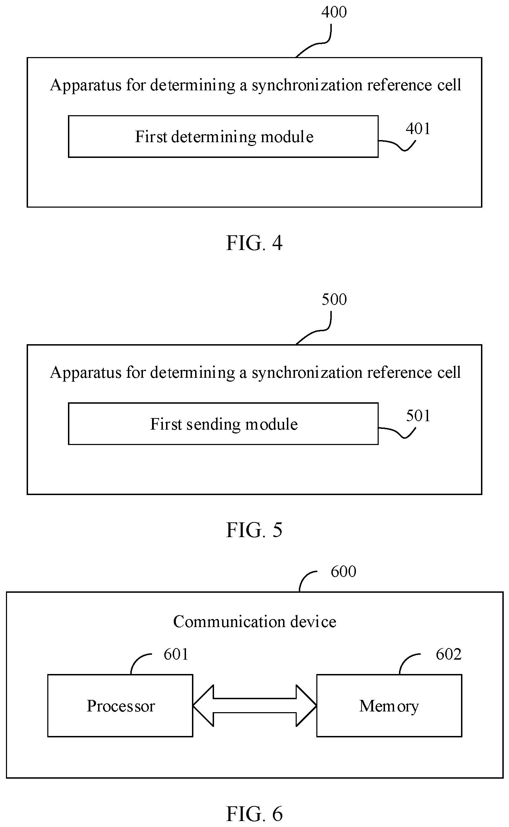

FIG. 4 is a schematic diagram 1 of a structure of an apparatus for determining a synchronization reference cell according to an embodiment of this application. As shown in FIG. 4, the apparatus 400 for determining a synchronization reference cell is applied to a terminal, and includes:
a first determining module 401, configured to determine a synchronization reference cell of a first cell from a cell set based on configuration information of at least one cell in the cell set, where the configuration information is used to assist the terminal in determining the synchronization reference cell of the first cell from the cell set, and the cell set includes the first cell.

In the apparatus for determining a synchronization reference cell provided in this embodiment of this application, the synchronization reference cell of the first cell is determined from the cell set based on the configuration information of the at least one cell in the cell set, and synchronization information of the first cell is determined based on synchronization information of the synchronization reference cell. In a case that a network-side device has not sent a synchronization reference signal of the first cell, the terminal may implement synchronization by using the synchronization information of the first cell. Correspondingly, with a terminal synchronization problem resolved, in a multi-cell deployment scenario, the network-side device is enabled to send synchronization reference signals of only some cells to the terminal, so that energy consumption of the network-side device is reduced, and a network energy-saving effect is achieved.

Optionally, the configuration information includes at least one of the following:
indication information, used to indicate whether a synchronization reference signal is being sent in a cell;
a synchronization reference signal configuration, including at least one of the following: a normal synchronization reference signal configuration for actual sending, an energy-saving synchronization reference signal configuration for actual sending, a synchronization reference signal configuration for on-demand sending, and a subcarrier spacing of a synchronization reference signal;
a synchronization reference signal sending feature, including at least one of the following: a synchronization reference signal sending periodicity and a synchronization reference signal sending form;
a center frequency;
band information;
an operating mode, where the operating mode includes a normal mode or an energy-saving mode;
a band type, where the band type includes a licensed band type or an unlicensed band type;
space deployment information, where the space deployment information is used to indicate whether cells are co-located;
a carrier type;
a timing advance group TAG configuration information; and
a subcarrier spacing of a bandwidth part BWP.

Optionally, the synchronization reference signal sending form includes at least one of the following:
actual sending; and
on-demand sending.

Optionally, the subcarrier spacing of the bandwidth part BWP includes at least one of the following:
a subcarrier spacing of an initial bandwidth part initial BWP;
a subcarrier spacing of a default BWP;
a subcarrier spacing of the first active BWP;
a largest or smallest subcarrier spacing in subcarrier spacings of all BWPs; and
a subcarrier spacing of a random access channel RACH.

Optionally, the first determining module 401 is further configured to:
in a case that the first cell in the cell set meets a first condition, determine, based on the configuration information of the at least one cell in the cell set, that the first cell is the synchronization reference cell.

The first condition includes at least one of the following:
a carrier type of the first cell is at least one of the following: a primary cell PCell carrier, a primary secondary cell group cell PSCell carrier, and an anchor carrier;
the first cell has a synchronization reference signal configuration; and
a synchronization reference signal sending periodicity of the first cell is less than or equal to a first threshold.

Optionally, the first determining module 401 is further configured to:
determine M second cells that meet a second condition from the cell set based on the configuration information of the at least one cell in the cell set; and
in a case that a third cell in the M second cells meets a third condition, determine, by the terminal, that the third cell is the synchronization reference cell.

The second condition includes at least one of the following:
the second cell has a synchronization reference signal configuration;
a synchronization reference signal sending form of the second cell is actual sending;
the synchronization reference signal sending form of the second cell is on-demand sending;
a synchronization reference signal sending periodicity of the second cell is less than or equal to a second threshold;
an interval between a center frequency of the second cell and a center frequency of the first cell is less than or equal to a third threshold;
a band number of the second cell and a band number of the first cell meet a first target condition, where the first target condition includes at least one of the following: the band numbers are the same, a difference between the band numbers is less than or equal to a fourth threshold, and the band numbers fall within a same frequency range;
an interval between a subcarrier spacing of a synchronization reference signal of the second cell and a subcarrier spacing of a BWP of the first cell is less than or equal to a fifth threshold; and
the second cell is co-located with the first cell.

Optionally, the third condition includes at least one of the following:
indication-based selection by the terminal or random selection; and
a priority of the configuration information.

The priority of the configuration information includes at least one of the following:
a priority of the synchronization reference signal sending form;
a priority of the synchronization reference signal sending periodicity in a case that the sending periodicity is a minimum value;
a priority of the center frequency of a third cell in a case that an interval between the center frequency of the third cell and a center frequency of the first cell is a minimum value;
a priority of a band number of the third cell in a case that the band number of the third cell is the same as a band number of the first cell;
a priority of a subcarrier spacing of a synchronization reference signal of the third cell in a case that an interval between the subcarrier spacing of the synchronization reference signal of the third cell and a subcarrier spacing of a BWP of the first cell is zero or is a minimum value; and
a priority of a carrier type of the third cell in a case that the carrier type of the third cell is any one of a PCell carrier, a PSCell carrier, and an anchor carrier.

Optionally, the first determining module 401 is further configured to:
in a case that a fourth cell in the cell set meets a fourth condition, determine, based on the configuration information of the at least one cell in the cell set, that the fourth cell is the synchronization reference cell.

The fourth condition includes at least one of the following:
the fourth cell has a synchronization reference signal configuration;
a synchronization reference signal sending form of the fourth cell is actual sending;
the synchronization reference signal sending form of the fourth cell is on-demand sending;
a synchronization reference signal sending periodicity of the fourth cell is less than or equal to a sixth threshold;
an interval between a center frequency of the fourth cell and a center frequency of the first cell is less than or equal to a seventh threshold;
a band number of the fourth cell and a band number of the first cell meet a second target condition, where the second target condition includes at least one of the following: the band numbers are the same, a difference between the band numbers is less than or equal to an eighth threshold, and the band numbers fall within a same frequency range;
an interval between a subcarrier spacing of a synchronization reference signal of the fourth cell and a subcarrier spacing of a BWP of the first cell is less than or equal to a ninth threshold; and
the fourth cell is co-located with the first cell.

Optionally, synchronization information of the first cell and/or synchronization information of the second cell include or includes at least one of the following:
frame synchronization information;
subframe synchronization information; and
timeslot synchronization information.

Optionally, the apparatus further includes:
a first receiving module, configured to receive the configuration information of the at least one cell in the cell set from the network-side device.

Optionally, the configuration information is carried in at least one of a synchronization information block, system information, and radio resource control RRC configuration information of a fifth cell.

The fifth cell includes at least one of the following: a PCell carrier, a PSCell carrier, and an anchor carrier.

Optionally, the apparatus further includes:
a second determining module, configured to determine, by the terminal, second synchronization information of the first cell based on first synchronization information of the synchronization reference cell.

Optionally, the apparatus further includes:
a second sending module, configured to: in a case that the synchronization reference cell meets a fifth condition, send a wakeup signal for the synchronization reference cell to the network-side device, where the wakeup signal is used to trigger a synchronization reference signal to be sent in the synchronization reference cell .

The fifth condition includes at least one of the following:
the synchronization reference cell has a synchronization reference signal configuration, and a synchronization reference signal sending form of the synchronization reference cell is on-demand sending;
the synchronization reference cell has a synchronization reference signal configuration, and an operating mode of the synchronization reference cell is the energy-saving mode;
a synchronization reference signal actually sent in the synchronization reference cell cannot meet a synchronization requirement of the terminal;
the operating mode of the synchronization reference cell is the energy-saving mode; and
the synchronization reference cell has a wakeup signal configuration, and the wakeup signal configuration is used to indicate the terminal to send the wakeup signal for the synchronization reference cell, to trigger the synchronization reference signal to be sent in the synchronization reference cell.

Optionally, the wakeup signal is sent in the first cell or the synchronization reference cell.

Optionally, the wakeup signal configuration is obtained in at least one of the following manners:
being predefined in a protocol; and
being carried in at least one of a synchronization information block, system information, and RRC configuration information of a sixth cell, where the sixth cell includes at least one of the following: a PCell carrier associated with the first cell or the synchronization reference cell, a PSCell carrier associated with the first cell or the synchronization reference cell, an anchor carrier associated with the first cell or the synchronization reference cell, a neighboring cell or an adjacent carrier of the first cell or the synchronization reference cell, and a cell in a same tracking area as the first cell or the synchronization reference cell.

FIG. 5 is a schematic diagram 2 of a structure of an apparatus for determining a synchronization reference cell according to an embodiment of this application. As shown in FIG. 5, the apparatus 500 for determining a synchronization reference cell is applied to a network-side device, and includes:
a first sending module 501, configured to send configuration information of at least one cell in a cell set to a terminal, where the configuration information is used to assist the terminal in determining a synchronization reference cell of a first cell from the cell set, and the cell set includes the first cell.

In the apparatus for determining a synchronization reference cell provided in this embodiment of this application, the configuration information of the at least one cell in the cell set is sent to the terminal, where the configuration information is used to assist the terminal in determining the synchronization reference cell of the first cell from the cell set, so that the terminal determines the synchronization reference cell of the first cell from the cell set based on the configuration information of the at least one cell in the cell set, determines synchronization information of the first cell based on synchronization information of the synchronization reference cell, and in a case that the network-side device has not sent a synchronization reference signal of the first cell, may implement synchronization by using the synchronization information of the first cell. With a terminal synchronization problem resolved, in a multi-cell deployment scenario, the network-side device is enabled to send synchronization reference signals of only some cells to the terminal, so that energy consumption of the network-side device is reduced, and a network energy-saving effect is achieved.

Optionally, the configuration information includes at least one of the following:
indication information, used to indicate whether a synchronization reference signal is being sent in a cell;
a synchronization reference signal configuration, including at least one of the following: a normal synchronization reference signal configuration for actual sending, an energy-saving synchronization reference signal configuration for actual sending, a synchronization reference signal configuration for on-demand sending, and a subcarrier spacing of a synchronization reference signal;
a synchronization reference signal sending feature, including at least one of the following: a synchronization reference signal sending periodicity and a synchronization reference signal sending form;
a center frequency;
band information;
an operating mode, where the operating mode includes a normal mode or an energy-saving mode;
a band type, where the band type includes a licensed band type or an unlicensed band type;
space deployment information, where the space deployment information is used to indicate whether cells are co-located;
a carrier type;
a timing advance group TAG configuration information; and
a subcarrier spacing of a bandwidth part BWP.

Optionally, the synchronization reference signal sending form includes at least one of the following:
actual sending; and
on-demand sending.

Optionally, the subcarrier spacing of the bandwidth part BWP includes at least one of the following:
a subcarrier spacing of an initial bandwidth part initial BWP;
a subcarrier spacing of a default BWP;
a subcarrier spacing of the first active BWP;
a largest or smallest subcarrier spacing in subcarrier spacings of all BWPs; and
a subcarrier spacing of a random access channel RACH.

Optionally, the configuration information is carried in at least one of a synchronization information block, system information, and radio resource control RRC configuration information of a fifth cell.

The fifth cell includes at least one of the following: a primary cell PCell carrier, a primary secondary cell group cell PSCell carrier, and an anchor carrier.

Optionally, the apparatus further includes:
a second receiving module, configured to receive a wakeup signal that is for the synchronization reference cell and that is sent by the terminal, where the wakeup signal is sent by the terminal to the network-side device in a case that the synchronization reference cell meets a fifth condition; and
trigger, by the network-side device based on the wakeup signal, the synchronization reference cell to send the synchronization reference signal to the terminal.

The fifth condition includes at least one of the following:
the synchronization reference cell has a synchronization reference signal configuration, and a synchronization reference signal sending form of the synchronization reference cell is on-demand sending;
the synchronization reference cell has a synchronization reference signal configuration, and an operating mode of the synchronization reference cell is the energy-saving mode;
a synchronization reference signal actually sent in the synchronization reference cell cannot meet a synchronization requirement of the terminal;
the operating mode of the synchronization reference cell is the energy-saving mode; and
the synchronization reference cell has a wakeup signal configuration, and the wakeup signal configuration is used to indicate the terminal to send the wakeup signal for the synchronization reference cell, to trigger the synchronization reference signal to be sent in the synchronization reference cell.

Optionally, the wakeup signal configuration is obtained in at least one of the following manners:
being predefined in a protocol; and
being carried in at least one of a synchronization information block, system information, and RRC configuration information of a sixth cell, where the sixth cell includes at least one of the following: a PCell carrier associated with the first cell or the synchronization reference cell, a PSCell carrier associated with the first cell or the synchronization reference cell, an anchor carrier associated with the first cell or the synchronization reference cell, a neighboring cell or an adjacent carrier of the first cell or the synchronization reference cell, and a cell in a same tracking area as the first cell or the synchronization reference cell.

The apparatus for determining a synchronization reference cell in this embodiment of this application may be an electronic device, for example, an electronic device having an operating system, or may be a component, for example, an integrated circuit or a chip, in the electronic device. The electronic device may be a terminal, or may be another device other than the terminal. For example, the terminal may include but is not limited to the types of the terminal 11 that are listed above. The another device may be a server, network attached storage (Network Attached Storage, NAS), or the like. This is not specifically limited in this embodiment of this application.

The apparatus for determining a synchronization reference cell provided in this embodiment of this application can implement the processes implemented in the method embodiments of FIG. 2 and FIG. 3, and achieve same technical effects. To avoid repetition, details are not described herein again.

FIG. 6 is a schematic diagram of a structure of a communication device according to an embodiment of this application. As shown in FIG. 6, the communication device 600 includes a processor 601 and a memory 602. The memory 602 stores a program or instructions capable of running on the processor 601. For example, when the communication device 600 is a terminal, when the program or the instructions are executed by the processor 601, the steps in the foregoing embodiments of the method for determining a synchronization reference cell are implemented, and same technical effects can be achieved. When the communication device 600 is a network-side device, when the program or the instructions are executed by the processor 601, the steps in the foregoing embodiments of the method for determining a synchronization reference cell are implemented, and same technical effects can be achieved. To avoid repetition, details are not described herein again.

An embodiment of this application further provides a terminal, including a processor and a communication interface. The processor is configured to determine a synchronization reference cell of a first cell from a cell set based on configuration information of at least one cell in the cell set. The cell set includes the first cell. The terminal embodiment corresponds to the foregoing terminal-side method embodiment. Each implementation process and implementation of the foregoing method embodiment are applicable to the terminal embodiment, and same technical effects can be achieved.

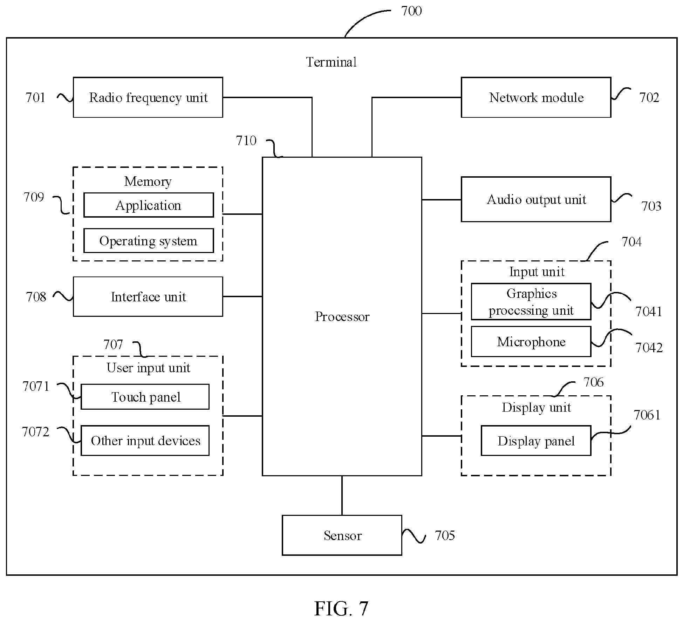

FIG. 7 is a schematic diagram of a structure of a terminal according to an embodiment of this application. As shown in FIG. 7, the terminal 700 includes but is not limited to at least some of a radio frequency unit 701, a network module 702, an audio output unit 703, an input unit 704, a sensor 705, a display unit 706, a user input unit 707, an interface unit 708, a memory 709, a processor 710, and the like.

A person skilled in the art may understand that the terminal 700 may further include a power supply (for example, a battery) that supplies power to each component, and the power supply may be logically connected to the processor 710 by using a power management system, to implement functions such as charging and discharging management and power consumption management by using the power management system. A structure of the terminal shown in FIG. 7 does not constitute a limitation on the terminal. The terminal may include more or fewer components than those shown in the figure, or combine some components, or have a different component arrangement. Details are not described herein.

It should be understood that in this embodiment of this application, the input unit 704 may include a graphics processing unit (Graphics Processing Unit, GPU) 7041 and a microphone 7042. The graphics processing unit 7041 processes image data of a still picture or a video obtained by an image capturing apparatus (for example, a camera) in a video capturing mode or an image capturing mode. The display unit 706 may include a display panel 7061, and the display panel 7061 may be configured in a form of a liquid crystal display, an organic light emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (for example, a volume control key or a power button), a trackball, a mouse, and a joystick. Details are not described herein.

In this embodiment of this application, after receiving downlink data from a network-side device, the radio frequency unit 701 may transmit the downlink data to the processor 710 for processing. In addition, the radio frequency unit 701 may send uplink data to the network-side device. Generally, the radio frequency unit 701 includes but is not limited to an antenna, an amplifier, a transceiver, a coupler, a low-noise amplifier, a duplexer, and the like.

The memory 709 may be configured to store a software program or instructions and various types of data. The memory 709 may mainly include a first storage area for storing a program or instructions and a second storage area for storing data. The first storage area may store an operating system, an application or an instruction required by at least one function (for example, a sound playing function or an image playing function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in this embodiment of this application includes but is not limited to these memories and any other suitable type of memory.

The processor 710 may include one or more processing units. Optionally, an application processor and a modem processor are integrated into the processor 710. The application processor mainly processes operations related to an operating system, a user interface, an application, and the like, and the modem processor, for example, a baseband processor, mainly processes a wireless communication signal. It may be understood that alternatively, the modem processor may not be integrated into the processor 710.

The processor 710 is configured to determine a synchronization reference cell of a first cell from a cell set based on configuration information of at least one cell in the cell set, where the configuration information is used to assist the terminal in determining the synchronization reference cell of the first cell from the cell set, and the cell set includes the first cell.

In this embodiment of this application, the processor determines the synchronization reference cell of the first cell from the cell set based on the configuration information of the at least one cell in the cell set, determines synchronization information of the first cell based on synchronization information of the synchronization reference cell, and in a case that a network-side device has not sent a synchronization reference signal of the first cell, may implement synchronization by the terminal by using the synchronization information of the first cell. Correspondingly, with a terminal synchronization problem resolved, in a multi-cell deployment scenario, the network-side device is enabled to send synchronization reference signals of only some cells to the terminal, so that energy consumption of the network-side device is reduced, and a network energy-saving effect is achieved.

An embodiment of this application further provides a network-side device, including a processor and a communication interface. The processor is configured to send configuration information of at least one cell in a cell set to a terminal. The configuration information is used to assist the terminal in determining a synchronization reference cell of a first cell from the cell set, and the cell set includes the first cell. The network-side device embodiment corresponds to the foregoing network-side device method embodiment. Each implementation process and implementation of the foregoing method embodiment are applicable to the network-side device embodiment, and same technical effects can be achieved.

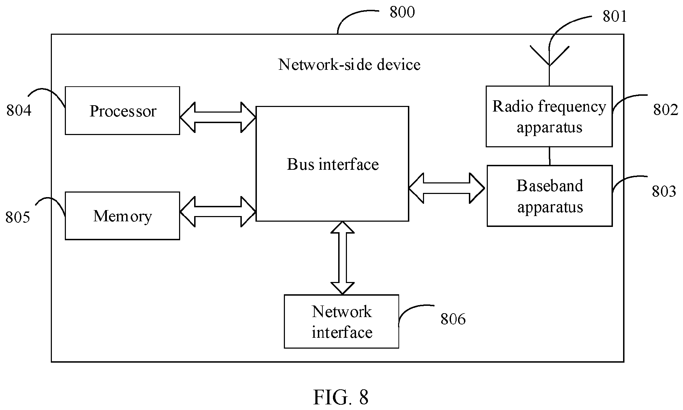

FIG. 8 is a schematic diagram of a structure of a network-side device according to an embodiment of this application. As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes to-be-sent information, and sends information obtained through processing to the radio frequency apparatus 802. After processing the received information, the radio frequency apparatus 802 sends, through the antenna 801, information obtained through processing.

The method performed by the network-side device in the foregoing embodiment may be implemented in the baseband apparatus 803. The baseband apparatus 803 includes a baseband processor.

For example, the baseband apparatus 803 may include at least one baseband board. A plurality of chips are disposed on the baseband board. As shown in FIG. 8, one of the chips is, for example, the baseband processor, and is connected to the memory 805 through a bus interface, to invoke a program in the memory 805 to perform the operations of the network device shown in the foregoing method embodiment.

The network-side device may further include a network interface 806, and the interface is, for example, a common public radio interface (common public radio interface, CPRI).

Specifically, the network-side device 800 in this embodiment of the present invention further includes instructions or a program that is stored in the memory 805 and that is capable of running on the processor 804. The processor 804 invokes the instructions or the program in the memory 805 to perform the method for determining a synchronization reference cell described above, and same technical effects are achieved. To avoid repetition, details are not described herein again.

An embodiment of this application further provides a system for determining a synchronization reference cell, including a terminal and a network-side device. The terminal may be configured to perform the steps of the method for determining a synchronization reference cell described in FIG. 2, and the network-side device may be configured to perform the steps of the method for determining a synchronization reference cell described in FIG. 3.

An embodiment of this application further provides a readable storage medium. The readable storage medium may be volatile or may be non-volatile. The readable storage medium stores a program or instructions, and when the program or the instructions are executed by a processor, the processes in the foregoing embodiments of the method for determining a synchronization reference cell are implemented, and same technical effects can be achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes in the foregoing embodiments of the method for determining a synchronization reference cell, and same technical effects can be achieved. To avoid repetition, details are not described herein again.

It should be understood that the chip mentioned in this embodiment of this application may also be referred to as a system on chip, a system chip, a chip system, a system-on-a-chip, or the like.

An embodiment of this application further provides a computer program/program product. The computer program/program product is stored on a storage medium. The computer program/program product is executed by at least one processor to implement the processes in the foregoing embodiments of the method for determining a synchronization reference cell, and same technical effects can be achieved. To avoid repetition, details are not described herein again.

It should be noted that in this specification, the terms "include", "comprise", or any other variants thereof are intended to cover a non-exclusive inclusion, so that a process, a method, an article, or an apparatus that includes a list of elements not only includes those elements but also includes other elements that are not expressly listed, or further includes elements inherent to such a process, a method, an article, or an apparatus. Without more constraints, an element defined by the phrase "including a..." does not preclude the existence of additional identical elements in the process, method, article, or apparatus that includes the element. In addition, it should be noted that the scope of the the method and the apparatus in the implementations of this application are not limited to functions being performed in the order illustrated or discussed, and may further include functions being performed at basically simultaneously or in reverse order depending on the functions involved. For example, the described method may be performed in a different order than the described order. In addition, various steps may be further added, omitted, or combined. In addition, features described with reference to some examples may be combined in other examples.

According to the foregoing descriptions of the implementations, a person skilled in the art may clearly understand that the method in the foregoing embodiments may be implemented by using software and a necessary universal hardware platform, or certainly may be implemented by using hardware. However, in many cases, the former is a better implementation. Based on such an understanding, the technical solutions of this application essentially or the part contributing to the prior art may be implemented in a form of a computer software product. The computer software product is stored on a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are merely examples but not limitations. A person of ordinary skill in the art may further make many variations under the teachings of this application without departing from the objective of this application and the protection scope of the claims, and such variations shall all fall within the protection scope of this application.

## Claims

1. A method for determining a synchronization reference cell, comprising:
determining, by a terminal, a synchronization reference cell of a first cell from a cell set based on configuration information of at least one cell in the cell set, wherein the configuration information is used to assist the terminal in determining the synchronization reference cell of the first cell from the cell set, and the cell set comprises the first cell.

2. The method for determining a synchronization reference cell according to claim 1, wherein the configuration information comprises at least one of the following:
indication information, used to indicate whether a synchronization reference signal is being sent in a cell;
a synchronization reference signal configuration, comprising at least one of the following: a normal synchronization reference signal configuration for actual sending, an energy-saving synchronization reference signal configuration for actual sending, a synchronization reference signal configuration for on-demand sending, and a subcarrier spacing of a synchronization reference signal;
a synchronization reference signal sending feature, comprising at least one of the following: a synchronization reference signal sending periodicity and a synchronization reference signal sending form;
a center frequency;
band information;
an operating mode, wherein the operating mode comprises a normal mode or an energy-saving mode;
a band type, wherein the band type comprises a licensed band type or an unlicensed band type;
space deployment information, wherein the space deployment information is used to indicate whether cells are co-located;
a carrier type;
a timing advance group TAG configuration information; and
a subcarrier spacing of a bandwidth part BWP.

3. The method for determining a synchronization reference cell according to claim 2, wherein the synchronization reference signal sending form comprises at least one of the following:
actual sending; and
on-demand sending.

4. The method for determining a synchronization reference cell according to claim 2, wherein the subcarrier spacing of the bandwidth part BWP comprises at least one of the following:
a subcarrier spacing of an initial bandwidth part initial BWP;
a subcarrier spacing of a default BWP;
a subcarrier spacing of a first active BWP;
a largest or smallest subcarrier spacing in subcarrier spacings of all BWPs; and
a subcarrier spacing of a random access channel RACH.

5. The method for determining a synchronization reference cell according to claim 2, wherein the determining, by a terminal, a synchronization reference cell of a first cell from a cell set based on configuration information of at least one cell in the cell set comprises:
in a case that the first cell in the cell set meets a first condition, determining, by the terminal based on the configuration information of the at least one cell in the cell set, that the first cell is the synchronization reference cell, wherein
the first condition comprises at least one of the following:
a carrier type of the first cell is at least one of the following: a primary cell PCell carrier, a primary secondary cell group cell PSCell carrier, and an anchor carrier;
the first cell has a synchronization reference signal configuration; and
a synchronization reference signal sending periodicity of the first cell is less than or equal to a first threshold.

6. The method for determining a synchronization reference cell according to claim 2, wherein the determining, by a terminal, a synchronization reference cell of a first cell from a cell set based on configuration information of at least one cell in the cell set comprises:
determining, by the terminal, M second cells that meet a second condition from the cell set based on the configuration information of the at least one cell in the cell set; and
in a case that a third cell in the M second cells meets a third condition, determining, by the terminal, that the third cell is the synchronization reference cell, wherein
the second condition comprises at least one of the following:
the second cell has a synchronization reference signal configuration;
a synchronization reference signal sending form of the second cell is actual sending;
the synchronization reference signal sending form of the second cell is on-demand sending;
a synchronization reference signal sending periodicity of the second cell is less than or equal to a second threshold;
an interval between a center frequency of the second cell and a center frequency of the first cell is less than or equal to a third threshold;
a band number of the second cell and a band number of the first cell meet a first target condition, wherein the first target condition comprises at least one of the following: the band numbers are the same, a difference between the band numbers is less than or equal to a fourth threshold, and the band numbers fall within a same frequency range;
an interval between a subcarrier spacing of a synchronization reference signal of the second cell and a subcarrier spacing of a BWP of the first cell is less than or equal to a fifth threshold; and
the second cell is co-located with the first cell.

7. The method for determining a synchronization reference cell according to claim 5, wherein the third condition comprises at least one of the following:
indication-based selection by the terminal or random selection; and
a priority of the configuration information, wherein
the priority of the configuration information comprises at least one of the following:
a priority of the synchronization reference signal sending form;
a priority of the synchronization reference signal sending periodicity in a case that the sending periodicity is a minimum value;
a priority of a center frequency of a third cell in a case that an interval between the center frequency of the third cell and a center frequency of the first cell is a minimum value;
a priority of a band number of the third cell in a case that the band number of the third cell is the same as a band number of the first cell;
a priority of a subcarrier spacing of a synchronization reference signal of the third cell in a case that an interval between the subcarrier spacing of the synchronization reference signal of the third cell and a subcarrier spacing of a BWP of the first cell is zero or is a minimum value; and
a priority of a carrier type of the third cell in a case that the carrier type of the third cell is any one of a PCell carrier, a PSCell carrier, and an anchor carrier.

8. The method for determining a synchronization reference cell according to claim 2, wherein the determining, by a terminal, a synchronization reference cell of a first cell from a cell set based on configuration information of at least one cell in the cell set comprises:
in a case that a fourth cell in the cell set meets a fourth condition, determining, by the terminal based on the configuration information of the at least one cell in the cell set, that the fourth cell is the synchronization reference cell, wherein
the fourth condition comprises at least one of the following:
the fourth cell has a synchronization reference signal configuration;
a synchronization reference signal sending form of the fourth cell is actual sending;
the synchronization reference signal sending form of the fourth cell is on-demand sending;
a synchronization reference signal sending periodicity of the fourth cell is less than or equal to a sixth threshold;
an interval between a center frequency of the fourth cell and a center frequency of the first cell is less than or equal to a seventh threshold;
a band number of the fourth cell and a band number of the first cell meet a second target condition, wherein the second target condition comprises at least one of the following: the band numbers are the same, a difference between the band numbers is less than or equal to an eighth threshold, and the band numbers fall within a same frequency range;
an interval between a subcarrier spacing of a synchronization reference signal of the fourth cell and a subcarrier spacing of a BWP of the first cell is less than or equal to a ninth threshold; and
the fourth cell is co-located with the first cell.

9. The method for determining a synchronization reference cell according to any one of claims 1 to 8, wherein first synchronization information and/or second synchronization information comprise or comprises at least one of the following:
frame synchronization information;
subframe synchronization information; and
timeslot synchronization information.

10. The method for determining a synchronization reference cell according to any one of claims 1 to 9, wherein the method further comprises:
receiving, by the terminal, the configuration information of the at least one cell in the cell set from a network-side device.

11. The method for determining a synchronization reference cell according to claim 10, wherein the configuration information is carried in at least one of a synchronization information block, system information, and radio resource control RRC configuration information of a fifth cell; and
the fifth cell comprises at least one of the following: a PCell carrier, a PSCell carrier, and an anchor carrier.

12. The method for determining a synchronization reference cell according to any one of claims 1 to 11, wherein the method further comprises:
determining, by the terminal, second synchronization information of the first cell based on first synchronization information of the synchronization reference cell.

13. The method for determining a synchronization reference cell according to any one of claims 1 to 12, wherein the method further comprises:
in a case that the synchronization reference cell meets a fifth condition, sending, by the terminal, a wakeup signal for the synchronization reference cell to the network-side device, wherein the wakeup signal is used to trigger a synchronization reference signal to be sent in the synchronization reference cell, wherein
the fifth condition comprises at least one of the following:
the synchronization reference cell has a synchronization reference signal configuration, and a synchronization reference signal sending form of the synchronization reference cell is on-demand sending;
the synchronization reference cell has a synchronization reference signal configuration, and an operating mode of the synchronization reference cell is the energy-saving mode;
a synchronization reference signal actually sent in the synchronization reference cell cannot meet a synchronization requirement of the terminal;
the operating mode of the synchronization reference cell is the energy-saving mode; and
the synchronization reference cell has a wakeup signal configuration, and the wakeup signal configuration is used to indicate the terminal to send the wakeup signal for the synchronization reference cell, to trigger the synchronization reference signal to be sent in the synchronization reference cell.

14. The method for determining a synchronization reference cell according to claim 13, wherein the wakeup signal is sent in the first cell or the synchronization reference cell.

15. The method for determining a synchronization reference cell according to claim 13, wherein the wakeup signal configuration is obtained in at least one of the following manners:
being predefined in a protocol; and
being carried in at least one of a synchronization information block, system information, and RRC configuration information of a sixth cell, wherein the sixth cell comprises at least one of the following: a PCell carrier associated with the first cell or the synchronization reference cell, a PSCell carrier associated with the first cell or the synchronization reference cell, an anchor carrier associated with the first cell or the synchronization reference cell, a neighboring cell or an adjacent carrier of the first cell or the synchronization reference cell, and a cell in a same tracking area as the first cell or the synchronization reference cell.

16. A method for determining a synchronization reference cell, comprising:
sending, by a network-side device, configuration information of at least one cell in a cell set to a terminal, wherein the configuration information is used to assist the terminal in determining a synchronization reference cell of a first cell from the cell set, and the cell set comprises the first cell.

17. The method for determining a synchronization reference cell according to claim 16, wherein the configuration information comprises at least one of the following:
indication information, used to indicate whether a synchronization reference signal is being sent in a cell;
a synchronization reference signal configuration, comprising at least one of the following: a normal synchronization reference signal configuration for actual sending, an energy-saving synchronization reference signal configuration for actual sending, a synchronization reference signal configuration for on-demand sending, and a subcarrier spacing of a synchronization reference signal;
a synchronization reference signal sending feature, comprising at least one of the following: a synchronization reference signal sending periodicity and a synchronization reference signal sending form;
a center frequency;
band information;
an operating mode, wherein the operating mode comprises a normal mode or an energy-saving mode;
a band type, wherein the band type comprises a licensed band type or an unlicensed band type;
space deployment information, wherein the space deployment information is used to indicate whether cells are co-located;
a carrier type;
a timing advance group TAG configuration information; and
a subcarrier spacing of a bandwidth part BWP.

18. The method for determining a synchronization reference cell according to claim 17, wherein the synchronization reference signal sending form comprises at least one of the following:
actual sending; and
on-demand sending.

19. The method for determining a synchronization reference cell according to claim 17, wherein the subcarrier spacing of the bandwidth part BWP comprises at least one of the following:
a subcarrier spacing of an initial bandwidth part initial BWP;
a subcarrier spacing of a default BWP;
a subcarrier spacing of a first active BWP;
a largest or smallest subcarrier spacing in subcarrier spacings of all BWPs; and
a subcarrier spacing of a random access channel RACH.

20. The method for determining a synchronization reference cell according to claim 16, wherein the configuration information is carried in at least one of a synchronization information block, system information, and radio resource control RRC configuration information of a fifth cell; and
the fifth cell comprises at least one of the following: a primary cell PCell carrier, a primary secondary cell group cell PSCell carrier, and an anchor carrier.

21. The method for determining a synchronization reference cell according to any one of claims 16 to 20, wherein the method further comprises:
receiving, by the network-side device, a wakeup signal that is for the synchronization reference cell and that is sent by the terminal, wherein the wakeup signal is used to trigger a synchronization reference signal to be sent in the synchronization reference cell; and
triggering, by the network-side device based on the wakeup signal, the synchronization reference cell to send the synchronization reference signal to the terminal.

22. An apparatus for determining a synchronization reference cell, comprising:
a first determining module, configured to determine a synchronization reference cell of a first cell from a cell set based on configuration information of at least one cell in the cell set, wherein the configuration information is used to assist the apparatus in determining the synchronization reference cell of the first cell from the cell set, and the cell set comprises the first cell.

23. An apparatus for determining a synchronization reference cell, comprising:
a first sending module, configured to send configuration information of at least one cell in a cell set to a terminal, wherein the configuration information is used to assist the terminal in determining a synchronization reference cell of a first cell from the cell set, and the cell set comprises the first cell.

24. A terminal, comprising a processor and a memory, wherein the memory stores a program or instructions capable of running on the processor, and when the program or the instructions are executed by the processor, the steps of the method for determining a synchronization reference cell according to any one of claims 1 to 15 are implemented.

25. A network-side device, comprising a processor and a memory, wherein the memory stores a program or instructions capable of running on the processor, and when the program or the instructions are executed by the processor, the steps of the method for determining a synchronization reference cell according to any one of claims 16 to 21 are implemented.

26. A readable storage medium, wherein a program or instructions are stored on the readable storage medium, and when the program or the instructions are executed by a processor, the method for determining a synchronization reference cell according to any one of claims 1 to 15 is implemented, or the steps of the method for determining a synchronization reference cell according to any one of claims 16 to 21 are implemented.
